# EUROPEAN PATENT APPLICATION

(11) **EP 4 838 321 A2**
(43) Date of publication of application: **11.11.2026**
(21) Application number: 26171643.5
(22) Date of filing: 10.04.2026
(51) Int. Cl.: G05B 19/05, G05B 19/418, G06F 8/34

(54) **INTEGRATION OF PROGRAMMING INTERFACES INTO CODE FOR INDUSTRIAL AUTOMATION ENVIRONMENTS**

(30) Priority: 18.04.2025 US 202519183003
(71) Applicant: Rockwell Automation Technologies, Inc., Mayfield Heights, OH 44124 (US)
(72) Inventor: Stanek, Christopher E., Mayfield Heights, OH, 44124 (US); Majewski, Lorenzo P., Mayfield Heights, OH, 44124 (US); Stuart, Shawn O., Mayfield Heights, OH, 44124 (US)
(74) Representative: Grünecker Patent- und Rechtsanwälte PartG mbB

(57) **Abstract**

Various embodiments include a system that comprises processing circuitry of an Integrated Design Environment (IDE) of an industrial automation environment. The processing circuitry generates a control program executable by a Programmable Logic Controller (PLC) for an industrial device. The control program comprises code to implement functionality of the industrial device. The processing circuitry generates a programming interface that defines the functionality of the industrial device. The processing circuitry adds the programming interface to the code. The processing circuitry provides the control program to the PLC. The PLC executes the code of the control program for the industrial device to implement the functionality defined by the programming interface.

## Description

### TECHNICAL FIELD

Various implementations disclosed herein relate to industrial automation environments, and more specifically, to integrating programming interfaces into automation code for industrial automation environments.

### BACKGROUND

Industrial automation environments comprise computing and mechanical systems configured to implement an industrial process. In industrial automation environments, control systems are used to drive various operations along an industrial line. Control programs are developed by programmers in the Integrated Design Environment (IDE) using design applications. The design applications comprise programming tools to design control programs for the industrial manufacturing environments. The control programs comprise logic to control industrial devices to carry out an industrial operation. Different portions of the control program logic and correspond to industrial assets, devices, and sensors. The control programs are used by control systems like Programmable Logic Controllers (PLCs) to drive the industrial assets, devices, and sensors in an industrial process.

Industrial automation processes are complicated and interconnected processes and comprise a large number (e.g., thousands) of assets, devices, sensors, and the like. As such, the portions of logic in the control program that correspond to the assets, devices, sensors, and/or other automation systems are numerous and interdependent. This logical interdependence creates difficulty in making code changes in the control program to reflect changes in the industrial automated process. For example, a change in one portion of the control program may require changes in numerous other portions of the control program to be successfully implemented. This increases the time and effort required to implement control program changes and decreases the overall efficiency of industrial automation environments.

Unfortunately, industrial automation environments do not effectively and efficiently generate and update control programs. Moreover, industrial automation environments do not structure their control programs to facilitate physical changes to their automated processes.

### OVERVIEW

This Overview is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Various embodiments of the present technology generally relate to solutions for industrial automation environments. Some embodiments comprise a method. The method comprises generating, by an Integrated Design Environment (IDE) of an industrial automation environment, a control program executable by a Programmable Logic Controller (PLC) for an industrial device. The control program comprises code to implement functionality of the industrial device. The method further comprises generating, by the IDE, a programming interface that defines the functionality of the industrial device. The method further comprises adding, by the IDE, the programming interface to the code. The method further comprises providing, by the IDE, the control program to the PLC for execution by the PLC.

Some embodiments comprise providing, via an IDE, a graphical user interface that comprises functionality for designing a control program executable by a PLC. The control program implements a capability of an industrial device when executed by the PLC. The functionality comprises defining a programming interface that describes the capability of the industrial device. The functionality further comprises incorporating the programming interface into the control program. The functionality further comprises leveraging the programming interface in the control program to isolate a first portion of the control program that implements the capability of the industrial device from a second portion of the control program that requests the capability of the industrial device via the programming interface.

Some embodiments comprise a system. The system comprises processing circuitry of an IDE of an industrial automation environment. The processing circuitry generates a control program executable by a PLC for an industrial device. The control program comprises code to implement functionality of the industrial device. The processing circuitry generates a programming interface that defines the functionality of the industrial device. The processing circuitry adds the programming interface to the code. The processing circuitry provides the control program to the PLC for execution by the PLC.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an example of an industrial automation environment.
Figure 2 illustrates an exemplary operation of the industrial automation environment.
Figure 3 illustrates another example of an industrial automation environment.
Figure 4 illustrates an example of a user interface.
Figure 5 illustrates another example of a user interface.
Figure 6 illustrates an example of a computing device that may be used in accordance with various embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

In conventional industrial automation environments, a control program for industrial devices is designed in what is referred to as an Integrated Design Environment (IDE). An IDE comprises a set of programming tools to generate control programs. The control program comprises instructions for controlling and performing operations using devices in the industrial automation environment. An industrial controller like a Programmable Logic Controller (PLC) receives and executes the control program. The PLC generates control signaling based on the execution of the control program and transfers the control signaling to drive the operation of downstream devices, machinery, and automated processes. Different portions of the control program correspond to different industrial devices. Since industrial automated processes are often highly connected (e.g., an automated assembly line), the different portions of the control program may be interdependent, and their programmatic logic is often linked. For example, a first portion of a control program executing on a PLC may generate an output consumed as an input by another portion of the control program. This interdependence reduces the modularity of and increases the difficulty of altering control programs as a change in one portion of the program requires corresponding changes in other portions of the control program. Moreover, changes to the industrial automated process like the addition or replacement of an industrial device are difficult to implement in the control program due to the aforementioned programmatic interdependence.

To address the above problems in conventional industrial automation environments, various embodiments of the present technology relate to the integration of programming interfaces into control programs. The programming interfaces define the functionality (e.g., inputs required, outputs produced, status, etc.) of the code when executed by the PLC. Each portion of the control program that corresponds to an industrial device is assigned a programming interface based on their corresponding device types. For example, portions of the control program that correspond to actuators may be assigned an actuator interface while portions of the control program that correspond to conveyors may be assigned a conveyor interface. When executed by the PLC to implement and control an industrial automated process, the different portions of the control program communicate with each other through their respective interfaces. This conceals the underlying code in the different portions of the control program from each other which reduces logical interdependence and increases code modularity. Advantageously, this reduces the difficulty of changing control programs and increases the ease of changing/adding devices to automated industrial processes. Now referring to the Figures.

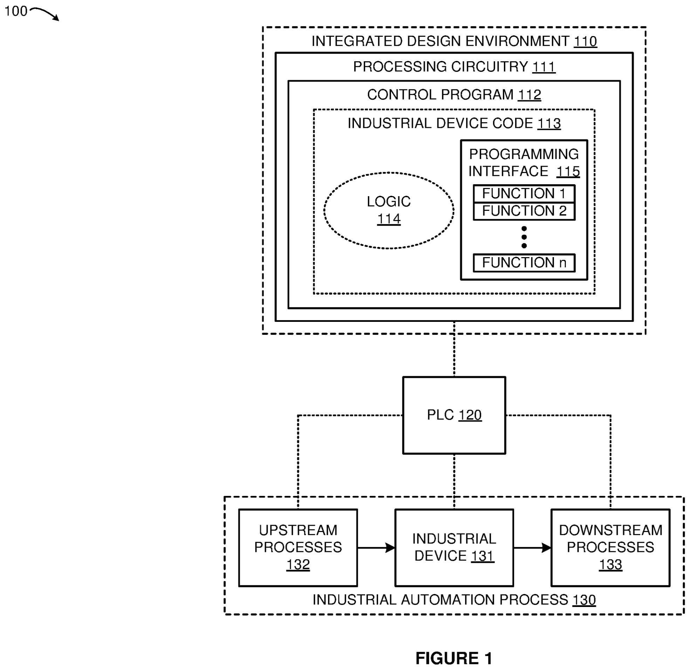

Figure 1 illustrates industrial automation environment 100 to integrate programming interfaces into automation code. Industrial automation environment 100 performs services like factory automation, factory control, machine control, smart manufacturing, machine communication and organization, and the like. Industrial automation environment 100 comprises IDE 110, PLC 120, and industrial automation process 130. IDE 110 comprises procession circuitry 111. Processing circuitry 111 implements control program 112. Control program 112 comprises industrial device code 113. Industrial device code 113 comprises logic 114 and programming interface 115. Industrial automation process 130 comprises industrial device 131, upstream processes 132, and downstream processes 133. In other examples, industrial automation environment 100 may include fewer or additional components than those illustrated in Figure 1. Likewise, the illustrated components of industrial automation environment 100 may include fewer or additional components, assets, or connections than shown. Each of processing circuitry 111, PLC 120, industrial device 131, upstream processes 132, and downstream processes 133 may be representative of a single computing apparatus or multiple computing apparatuses.

Various embodiments of industrial automation environment configuration and operation are described herein. In some examples, processing circuitry 111 generates control program 112. Control programs (e.g., control program 112) comprise a number of device code blocks (e.g., industrial device code 113) that each correspond to a device in industrial automation process 130. Each device code block comprises logic (e.g., logic 114) that drives the operation of the corresponding device when executed by a PLC (e.g., PLC 120). The different device code blocks in the control program may produce outputs for, or receive inputs from the other device code blocks while executing on the PLC. Control program 112 comprises a set of code blocks, ladder logic diagrams, smart objects, or other types of industrial automation code to implement industrial automation process 130. The code, blocks, ladder logic, and smart objects correspond to industrial assets, devices, and sensors in industrial automation process 130. Control program 112 is executable by control systems like PLC 120 to drive the industrial assets, devices, and sensors (e.g., industrial device 131, upstream processes 132, downstream processes 133, etc.) in industrial automation process 130. While control program 112 is illustrated as comprising industrial device code 113 which corresponds to industrial device 131, control program 112 typically comprises other device code that corresponds to upstream processes 132 and downstream processes 133. Industrial device code 113 comprises logic 114 that enables the functionality of industrial device 131. For example, PLC 120 may receive and execute logic 114 of control program 112. PLC 120 may generate and transfer control signaling to industrial device 131 based on the execution of logic 114. Industrial device 131 may operate in response to the control signaling. The control signaling may drive actuators in industrial device 131 that dictate the operation of industrial device 131.

Processing circuitry 111 generates programming interface 115. Programming interface 115 defines the functionality of industrial device 131. As illustrated in Figure 1, programming interface 115 lists Functions 1-n for industrial device 131. For example, programming interface 115 may list the required inputs and outputs of industrial device code 113 when executed by PLC 120 to drive the operation of industrial device 131. Processing circuitry 111 adds programming interface 115 to industrial device code 113 and provides control program 112 to PLC 120. For example, processing circuitry 111 may transfer control program 112 to an orchestration system (not illustrated) which then loads control program 112 to PLC 120. PLC 120 executes control program 112 to implement the functionality defined by programming interface 115 and drive industrial automation process 130. For example, PLC 120 may execute industrial device code 113 to drive the operation of industrial device 131 and may execute other parts of control program 112 (e.g., other industrial device code blocks) to drive upstream processes 132 and downstream processes 133. The various portions of control program 112 executing on PLC 120 may then communicate with each other via their respective interfaces.

In some examples, processing circuitry 111 provides a graphical user interface that comprises functionality for designing control program 112 executable by PLC 120. For example, processing circuitry 111 may generate control program 112, industrial device code 113, logic 114, and programming interface 115 in response to user inputs received via the graphical user interface. As discussed above, control program 112 implements the functionality of industrial device 131 when executed by PLC 120. The graphical user interface comprises functionality for defining programming interface 115 which describes the functionality of industrial device 131 and functionality for incorporating programming interface 115 into control program 112. The graphical user interface comprises further functionality for leveraging programming interface 115 to isolate the portion of control program 112 that implements the functionality of industrial device 131 (e.g., industrial device code 113) from other portion(s) of control program 112 (e.g., used to control upstream processes 132 and downstream processes 133) that request the functionality of industrial device 131 via programming interface 115. For example, another portion of control program 112 may only interact with logic 114 via programming interface 115.

Advantageously, industrial automation environment 100 effectively and efficiently integrates programming interfaces into control programs. Moreover, the use of control programs increases control program modularity, decreases control program complexity, reduces the amount of time required to implement changes in control programs, and facilitates changing/adding devices to industrial automation processes. These benefits increase the overall efficiency of industrial automation environment 100 when compared to conventional industrial automation environments.

IDE 110 is representative of programming tools to generate control programs to control the operations of industrial devices and implement industrial automation process 130. Processing circuitry 111 comprises one or more computing apparatuses configured to host an integrated design application to generate the control programs. It should be appreciated that the specific number of applications/modules hosted by processing circuitry 111 is not limited. Exemplary integrated design applications comprise Studio 5000^{®} and the like. Processing circuitry 111 may implement or otherwise comprise a user interface. The user interface may comprise display and facilitate user interaction with the integrated design application. The user interface may comprise one or more computing devices, display screens, touch screen devices, tablet devices, mobile user equipment, keyboards, and the like. The design application hosted by processing circuitry 111 may receive a series of user inputs via the user interface that drives the design application to generate control program 112. Control program 112 comprises machine instructions that direct the operations of industrial device 131, upstream processes 132, and downstream processes 133 to implement industrial automation process 130. Control program 112 may comprise functional block diagrams, ladder logic programs, smart objects, or some other type of machine instructions. Processing circuitry 111 may transfer the control program for delivery to PLC 120 to implement and control industrial automation process 130. Processing circuitry 111 may comprise transceiver systems that allow for the upload of control program 112 to PLC 120.

PLC 120 may comprise one or more computing devices configured to implement control programs generated in IDE 110 to control industrial automation process 130. For example, PLC 120 may receive and execute ladder logic in control program 112 and responsively transfer corresponding control signaling to drive industrial automation process 130. Industrial device 131, upstream processes 132, and downstream processes 133 operate in response to the control signaling. The control signaling drives actuators or other types of control elements in industrial device 131, upstream processes 132, and downstream processes 133. For example, the control signaling may correspond to an actuator setting that sets a motor speed in industrial device 131 to a desired value. In other examples, the control signaling may correspond to an actuator setting in industrial device 131 that sets a pump valve to an open position.

Industrial automation process 130 is representative of a manufacturing process, chemical production process, energy generation process, food processing process, or any other type of industrial process. Industrial device 131, upstream processes 132, and downstream processes 133 are representative of machines configured to carry out industrial automation process 130. Industrial device 131, upstream processes 132, and downstream processes 133 are representative of pumps, actuators, conveyors, generators, motors, turbines, heat exchanges, reactors, distillation systems, food processing systems, or any other type of industrial device. Typically, the type of machines represented by industrial device 131, upstream processes 132, and downstream processes 133 depends in part on the type of process that industrial automation process 130 is representative of. Industrial device 131, upstream processes 132, and downstream processes 133 may receive control signaling generated by a PLC in response to executing control program 112.

IDE 110, PLC 120, and industrial automation process 130 communicate over various communication links using communication technologies like industrial ethernet, Institute of Electrical and Electronic Engineers (IEEE) 802.3 (Ethernet), IEEE 802.11 (WiFi), Bluetooth, Time Division Multiplex (TDM), Data Over Cable System Interface Specification (DOCSIS), Internet Protocol (IP), General Packet Radio Service Transfer Protocol (GTP), and/or some other type of wireline and/or wireless networking protocol. The communication links comprise metallic links, glass fibers, radio channels, or some other communication media. The links use Ethernet, WiFi, virtual switching, inter-processor communication, bus interfaces, and/or some other data communication protocols.

IDE 110, PLC 120, and industrial automation process 130 comprise microprocessors, software, memories, transceivers, bus circuitry, and the like. The microprocessors comprise Central Processing Units (CPUs), Graphical Processing Units (GPUs), Digital Signal Processors (DSPs), Application-Specific Integrated Circuits (ASICs), Field Programmable Gate Arrays (FPGAs), analog computing circuits, and/or the like. The memories comprise Random Access Memory (RAM), flash circuitry, Hard Disk Drives (HDDs), Solid State Drives (SSDs), NonVolatile Memory Express (NVMe) SSDs, and/or the like. The memories store software like operating systems, user applications, networking applications, control applications, security applications, machine learning applications, and the like. The microprocessors retrieve the software from the memories and execute the software to drive the operation of industrial automation environment 100 as described herein.

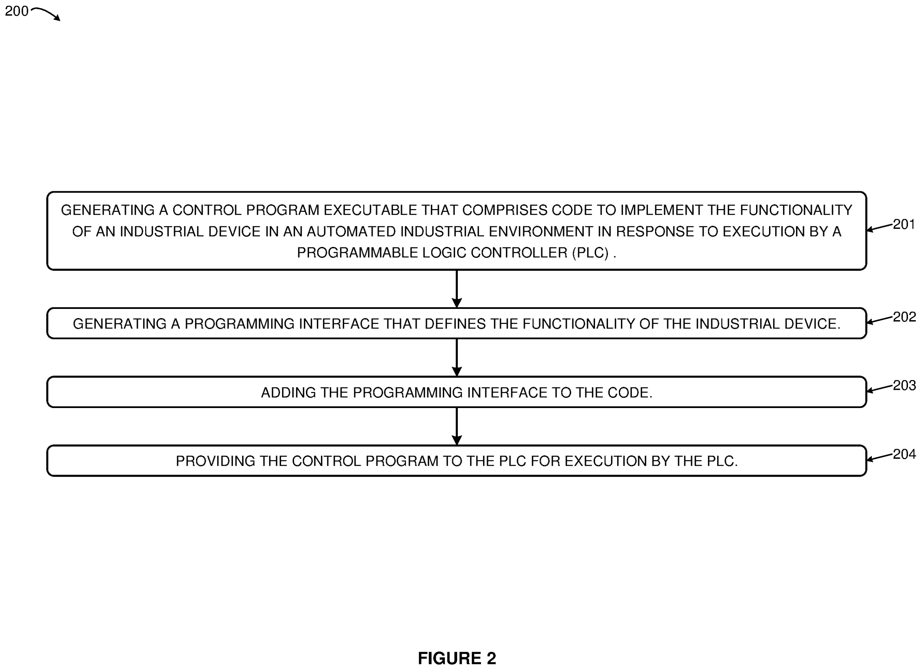

In some examples, industrial automation environment 100 implements process 200 illustrated in Figure 2. It should be appreciated that the structure and operation of industrial automation environment 100 may differ in other examples.

Figure 2 illustrates process 200. Process 200 comprises an exemplary operation of industrial automation environment 100 to integrate programming interfaces (e.g., programming interface 115) into automation code (e.g., industrial device code 113). Process 200 may vary in other examples. The operations of process 200 comprise generating a control program that comprises code to implement the functionality of an industrial device in an automated industrial environment in response to execution by a PLC (step 201). The operations further comprise generating a programming interface that defines the functionality of the industrial device (step 202). The operations further comprise adding the programming interface to the code (step 203). The operations further comprise providing the control program to the PLC for execution by the PLC (step 204). The PLC executes the code of the control program to implement the functionality defined by the programming interface.

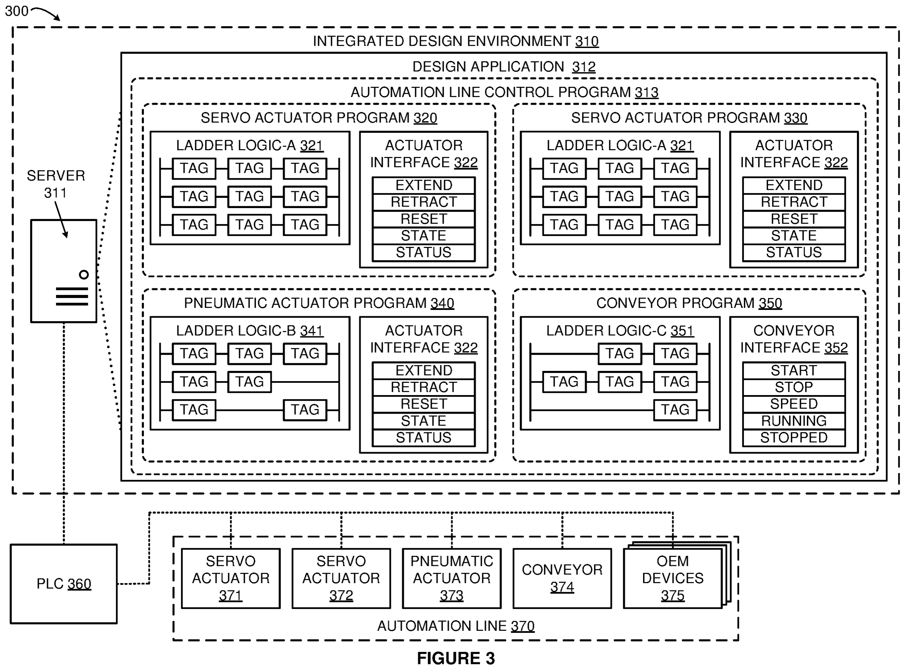

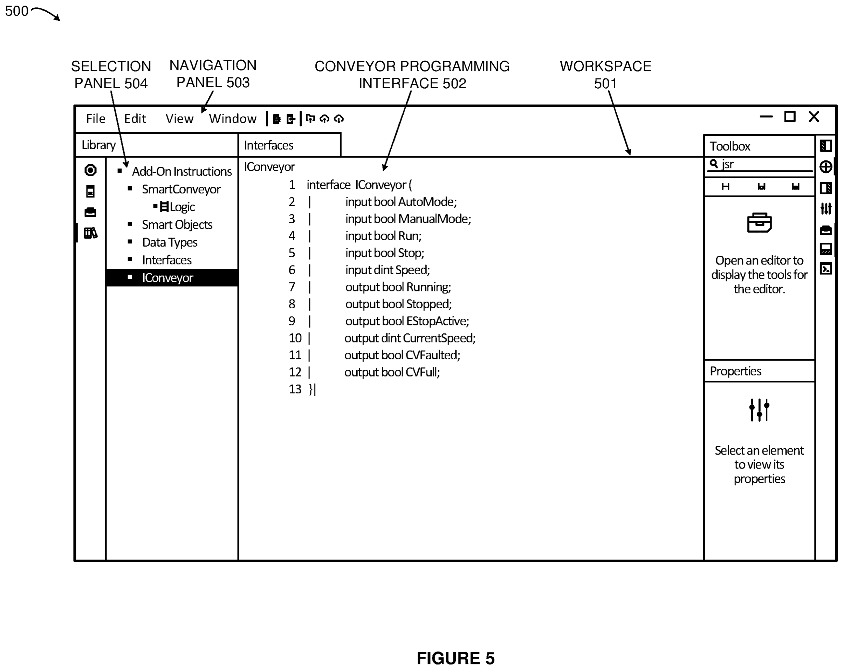

Figure 3 illustrates industrial automation environment 300 to integrate programming interfaces into automation code. Industrial automation environment 300 comprises an example of industrial automation environment 100, however environment 100 may differ. Industrial automation environment 300 comprises IDE 310, PLC 360, and automation line 370. IDE 310 comprises server 311. Server 311 hosts design application 312. Design application 312 comprises automation line control program 313 which in turn comprises servo actuator program 320, servo actuator program 330, pneumatic actuator program 340, and conveyor program 350. Servo actuator program 320 comprises ladder logic-A 321 and actuator interface 322. Servo actuator program 330 comprises ladder logic-A 321 and actuator interface 322. Pneumatic actuator program 340 comprises ladder logic-B 341 and actuator interface 322. Conveyor program 350 comprises ladder logic-C and conveyor interface 352. Automation line 370 comprises servo actuators 371 and 372, pneumatic actuator 373, conveyor 374, and Original Equipment Manufacturer (OEM) devices 375. Automation line control program 313 comprises an example of control program 112 illustrated in Figure 1, however control program 112 may differ. Programs 320, 330, 340, and 350 comprise examples of industrial device code 113 illustrated in Figure 1, however industrial device code 113 may differ. Ladder logic 321, 341, and 351 comprise examples of logic 114 illustrated in Figure 1, however logic 114 may differ. Interfaces 322 and 352 comprise examples of programming interface 115 illustrated in Figure 1, however programming interface 115 may differ. Automation line 370 comprises an example of industrial automation process 130 illustrated in Figure 1, however industrial automation process 130 may differ. Industrial automation environment 300 typically comprises additional components like Human Machine Interfaces (HMIs), orchestration systems, machine learning systems, and the like, however these additional components are omitted for clarity. In other examples, industrial automation environment may comprise additional or different components than those illustrated in Figure 5.

In some examples, server 311 executes design application 312. Design application 312 receives a set of user inputs via a graphical user interface (not illustrated) to generate automation line control program 313 to drive the operation of the various devices that compose automation line 370. For example, the user inputs may comprise clicks, drag-and-drop actions, touch screen inputs, keyboard inputs, and the like. Design application 312 adds servo actuator program 320 to automation line control program 313 and designs ladder logic-A 321 to control servo actuator 371. Ladder logic-A 321 is industrial automation code interpretable by PLC 360 and comprises a set of program tags. The program tags comprise chunks of the control code and correspond to operations, variables, and/or other data relating to the functionality of servo actuator 371. Design application 312 defines actuator interface 322 based on the tags included in ladder logic-A 321. Actuator interface 322 comprises a contract that lists the required functions of ladder logic-A 321 when executed by PLC 360 to control servo actuator 371. The listed functions of actuator interface 322 are typically the only outputs/inputs exposed by the execution of servo actuator program 320. In this example, actuator interface 322 lists functions for extend, retract, reset, state, and status. For example, when PLC 360 executes ladder logic-A, PLC 360 may generate corresponding control signaling to extend, retract, reset, report the status, and/or report the state of servo actuator 371. Design application 312 adds servo actuator program 330 to automation line control program 313 to control servo actuator 372. Since servo actuator 372 comprises the same actuator type as servo actuator 371, design application 312 copies ladder logic-A 321 and actuator interface 322 into servo actuator program 330.

Design application 312 adds pneumatic actuator program 340 to automation line control program 313 and designs ladder logic-B 341 to control pneumatic actuator 373. Ladder logic-B 341 is industrial automation code interpretable by PLC 360 and comprises a different set of program tags than ladder logic-A 321. This is due to pneumatic actuator 373 comprising a different actuator type than servo actuators 371 and 372 (e.g., the underlying code to control pneumatic type actuators differs from servo type actuators). However, since actuators 371-373 all comprise the same device class (i.e., actuator), their functionality is the same even though the underlying code differs. Design application 312 adds actuator interface 322 to pneumatic actuator program 340 based on the shared device class.

Design application 312 adds conveyor program 350 to automation line control program 313 and designs ladder logic-C 351 to conveyor 374. Ladder logic-C 351 is industrial automation code interpretable by PLC 360 and comprises a different set of program tags and ladder logic-A 321 and ladder logic-B 341. Design application 312 defines conveyor interface 352 based on the tags included in ladder logic-C 351. Since conveyor 374 comprises a different device class and different functionality than actuators 371-373, design application 312 includes a different programming interface in conveyor program 350. Conveyor interface 352 comprises a contract that lists the required functions of ladder logic-C 351 when executed by PLC 360 to control conveyor 374. In this example, the listed functions of conveyor interface 352 comprise start, stop, speed, running status, and stopped status. Design application 312 typically generates and includes additional device programs into automation line control program 313 to control OEM devices 375, however these additional programs are omitted for clarity.

Once automation line control program 313 is complete, design application 312 pushes control program 313 to production. Server 311 transfers automation line control program 313 for delivery to PLC 360. For example, design application 312 may drive transceiver circuitry in server 311 to provide control program 313 to PLC 360. Server 311 may transfer automation line control program 313 to an orchestration system in industrial automation environment 300 which then loads automation line control program 313 to PLC 360. Exemplary orchestration systems include Pavilion8^{®} and the like. PLC 360 executes control program 313 to generate control signaling and transfers the resulting control signaling to actuators 371-373, conveyor 374, and OEM devices 375 to drive the operation of automation line 370. In particular, PLC 360 executes programs 320, 330, 340, and 350 that compose automation line control program 350. Programs 320, 330, 340, and 350 (as well as the programs for OEM devices 375) executing on PLC 360 communicate with each via their respective programming interfaces. Programs 320, 330, 340, and 350 produce outputs and receive inputs from each other based on their respective interfaces which effectively conceals their underlying ladder logic from each other. This inhibits functional interdependence between their respective ladder logic allowing for easy and efficient modification of control program 313. Advantageously, the programming interfaces allow for the efficient modification of existing control programs. For example, a user may swap out a servo actuator program with a pneumatic actuator program but since these programs utilize the same interface type, the outputs, inputs, and interactions between the device programs remain unchanged.

Actuators 371-373, conveyor 374, and OEM devices 375 are coupled to PLC 360. PLC 360 transfers control signaling generated by the execution of control program 313 to actuators 371-373, conveyor 374, and OEM devices 375. Actuators 371-373, conveyor 374, and OEM devices 375 receive their respective control signaling and operate according to the instructions. For example, one of OEM devices 375 may comprise an electric motor to drive a pump and is controlled by servo actuator 371. PLC 360 may execute servo actuator program 320 and determine a current level to power the electric motor at to achieve a desired pressure differential in the pump. PLC 360 may transfer control signaling to servo actuator 371 to control the motor in the one of OEM devices 375. Servo actuators 371 in the motor of the one of OEM devices 375 may receive the control signaling and apply the indicated current level to achieve the necessary power level for the electric motor to drive the motor at the speed necessary to achieve the desired pressure differential.

IDE 310 is representative of one or more computing devices integrated into a network configured to generate control programs for industrial automation environment 300. Server 311 comprises one or more computing devices configured to host design application 312. The one or more computing devices of server 311 comprise processors, bus circuitry, storage devices, software, and the like. The processors may comprise CPUs, GPUs, DSPs, ASICs, FPGAs, and the like. The storage devices comprise flash drives, RAM, HDDs, SSDs, NVMe SSDs, and the like. The storage devices store the software like design application 312. The processors may retrieve and execute software stored on the storage devices to drive the operation of design application 312. Design application 312 is representative of one or more integrated design applications, user interface applications, operating systems, modules, and the like. Design application 312 is configured to receive user inputs via a user interface and generate control program 313 based on the user inputs and/or other types of inputs.

PLC 360 comprise one or more computing devices configured to receive and execute control programs to generate control signaling for automation line 370. PLC 360 controls the automated and coordinated operation of automation line 370 based on the execution of control program 313. PLC 360 may implement control programs that may be designed using any number of programming tools in an integrated design environment (e.g., design application 312) such as text-based coding, smart objects, functional block diagrams, ladder logic, graphics-based programming, or other types of programming interfaces. The control program may be designed or programmed on a design computer running an integrated design environment (e.g., design application 312), then transmitted or uploaded to PLC 360.

PLC 360 controls automation line 370 by sending the control signaling over one or more data channels that support synchronous or asynchronous communications. PLC 360 comprises one or more computing devices. The one or more computing devices of PLC 360 comprise processors, bus circuitry, storage devices, software, and the like. The processors may comprise CPUs, GPUs, DSPs, ASICs, FPGAs, and the like. The storage devices comprise flash drives, RAM, HDDs, SSDs, NVMe SSDs, and the like. The storage devices store the software. The processors may retrieve and execute software stored on the storage devices to drive the operation of PLC 360.

Automation line 370 is representative of a manufacturing process, chemical production process, food processing process, or any other type of industrial process. Automation line 370 may comprises a process for manufacturing goods but may also comprise processes occurring within a utility plant (e.g., an electrical power plant), research or laboratory facility (e.g., a sample testing or processing facility), processes occurring within a food processing facility (e.g., a cattle processing plant), processes occurring within a chemical processing facility (e.g., petroleum refinery), or any other suitable industrial automated environment. Actuators 371-373, conveyor 374, and OEM devices 375 comprise factory or industrial machinery or manufacturing equipment such as conveyor belts or other conveyance mechanisms, robotic devices or other automated or programmable devices, packaging devices including boxing, capping, and sealing equipment, processing equipment, mixers, filling stations, quality control equipment, pumps, compressors, heat exchanges, centrifuges, mills, conveyers, filters, and/or other devices associated with manufacturing or other industrial processes. Although automation line 370 may comprise any number of industrial devices. Actuators 371-373, conveyor 374, and OEM devices 375 may comprise subcomponents (not illustrated for clarity) like motors, valves, electrical circuitry, processing circuitry, storage circuitry, transceivers, machined parts, and the like.

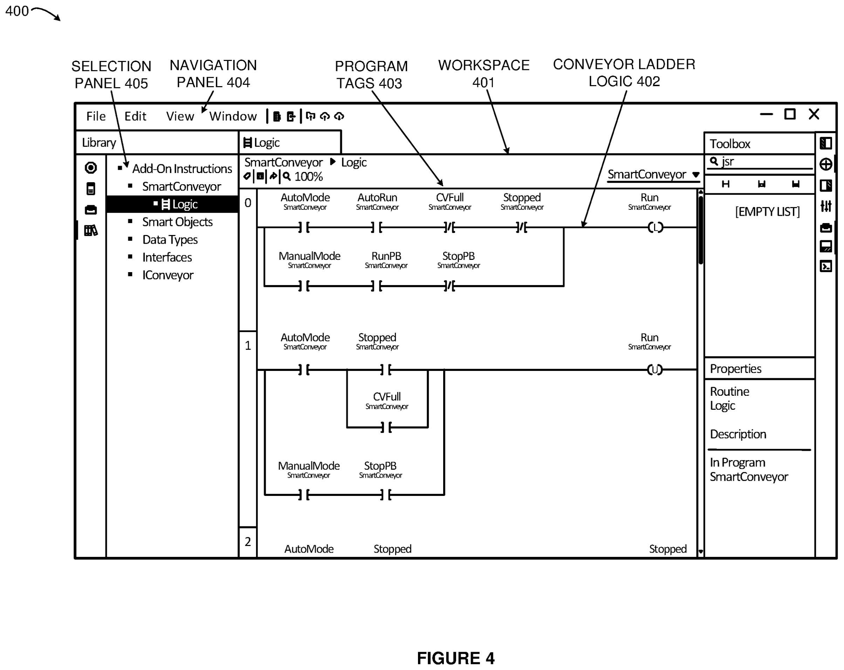

Figure 4 illustrates user interface 400. User interface 400 comprises an example of user interface 500 illustrated in Figure 5 and the graphical user interfaces described with respect to Figures 1 and 3, however user interface 400 may differ. User interface 400 comprises workspace 401, conveyor ladder logic 402, program tags 403, navigation panel 404, and selection panel 405 as well as other display elements. Workspace 401, conveyor ladder logic 402, program tags 403, navigation panel 404, and selection panel 405 and/or the other display elements included in user interface 400 may differ in other examples. Conveyor ladder logic 402 comprises an example of logic 114 illustrated in Figure 1 and ladder logic 321, 341, and 351 illustrated in Figure 3, however logic 114 and ladder logic 321, 341, and 351 may differ.

User interface 400 is representative of a display that provides a graphical representation of a design application (e.g., design application 312). The graphical representation may include one or more visual indicators relevant to a control program (e.g., automation line control program 313), such as visual indicators of visual code blocks, ladder logic, code chunks, functional block diagrams, and/or other types of visual indictors. In this example, the control program comprises conveyor ladder logic 402 and program tags 403, however user interface 400 may display different visual indicators for different control program types (e.g., smart object, functional code blocks, etc.). User interface 400 may be generated on a display screen for viewing or use by an operator or similar user within an IDE (e.g., IDE 310). For example, user interface 400 may be displayed on a display screen of a computer, a mobile device, a kiosk, a touchscreen device, or some other type of computing device of an IDE as described herein. A user may interact with the design application via user interface 400 to generate a control program. Upon generation of the control program, the design application may transfer the control program to a PLC (e.g., PLC 360) to implement an industrial automation process (e.g., automation line 370).

Workspace 401 comprises a display element of a design application that allows a user to build control programs for execution by a PLC. In this example, workspace 401 comprises conveyor ladder logic 402. For example, the design application generating user interface 400 may receive a set of user inputs to build conveyor ladder logic 402 and user interface 400 may responsively display conveyor ladder logic 402 in workspace 401. Workspace 401 is located in a central portion of user interface 400, however workspace 401 may be located on a different portion of user interface 400 in other examples. Ladder logic is a graphical PLC programming language which expresses logic operations with symbolic notation referred to as program tags. Ladder logic is made out of rungs of logic which each have tags. Conveyor ladder logic 402 comprises logic executable by a PLC to drive the operation of a conveyor. Conveyor ladder logic 402 arranges program tags 403 on its rungs. Program tags 403 correspond to operations (e.g., run, stop), variables (e.g., speed, start time, etc.), and states (e.g., running, automode, stopped, etc.) related to a conveyor. Program tags 403 define the functionality of a conveyor (or other industrial devices in other examples). For example, when a PLC executes conveyor ladder logic 402, the arrangement and type of program tags 403 in conveyor ladder logic 402 drives the PLC to generate control signaling to drive the operation of a conveyor.

Navigation panel 404 allows a user to access the various features available through user interface 400. Navigation panel 404 comprises tabs like file, edit, view, library management, tools, window, and help. In other examples, navigation panel 404 may comprise fewer tabs, more tabs, and/or different types of tabs. A user may select a tab to access the functionality of the tab. Upon selection, the tabs may open drop down menus that list their functionality. For example, a user may select the file tab and select an option from a drop-down menu to save a project. Navigation panel 404 is located on the top portion of user interface 400 however navigation panel 404 may be located on a different portion of user interface 400 in other examples.

Selection panel 405 comprises a set of selectable options that provide access to control programs, programming interfaces, and the like. Selection panel 405 comprises selectable options for Add-On Instructions, SmartConveyor, Logic, Smart Objects, Data Types, Interfaces, and IConveyor. In other examples, selection panel 405 may comprise fewer or different types of selectable options. A user may select a selectable option to access the functionality of the option. Upon selection, the option may open sub-options and/or may display the contents of the option in workspace 401. In this example, a user selects the Logic sub-option of the SmartConveyor option. In response, user interface 400 displays conveyor ladder logic 402 in workspace 401. Selection panel 405 is located on the left portion of user interface 400, however selection panel 405 may be located on a different portion of user interface 400.

Figure 5 illustrates user interface 500. User interface 500 comprises an example of user interface 400 illustrated in Figure 4 and the graphical user interfaces described with respect to Figures 1 and 3, however user interface 500 may differ. User interface 500 comprises workspace 501, conveyor interface 502, navigation panel 503, and selection panel 504 as well as other display elements. Workspace 501, conveyor interface 502, navigation panel 503, and selection panel 504 as well as other display elements included in user interface 500 may differ in other examples. Conveyor programming interface 502 comprises an example of programming interface 115 illustrated in Figure 1 and interfaces 322 and 352 illustrated in Figure 3, however programming interface 115 and interfaces 322 and 352 may differ.

Similar to user interface 400, user interface 500 is representative of a display that provides a graphical representation of a design application. The graphical representation may include one or more visual indicators relevant to a control program such as visual indicators of visual code blocks, ladder logic, code chunks, functional block diagrams, and/or other types of visual indictors. User interface 500 may be generated on a display screen for viewing or use by an operator or similar user within an IDE. Workspace 501, navigation panel 503, and selection panel 504 comprise similar functionality to workspace 401, navigation panel 404, and selection panel 405 described with respect to Figure 4. In this example, a user selects the IConveyor option in selection panel 504 causing conveyor programming interface 502 to be displayed in workspace 501.

Conveyor programming interface 502 defines the functionality (e.g., inputs, outputs, and status) of conveyor ladder logic 402 when executed by a PLC. Conveyor programming interface 502 may be user defined or automatically defined. Conveyor programming interface 502 is added or otherwise appended to conveyor ladder logic 402 to conceal the underlying logic of program tags 403. When executed by the PLC, conveyor ladder logic 402 interacts with other control programs for other devices controlled by the PLC via conveyor programming interface 502. For example, conveyor ladder logic 402 may receive inputs from and transfer outputs to other control programs based on the functionality listed by conveyor programming interface 502. Conveyor ladder logic 402 typically does not receive inputs or produce outputs that are not listed by conveyor programming interface 502. Conveyor programming interface 502 may be reused for other conveyor control programs based on the shared device class.

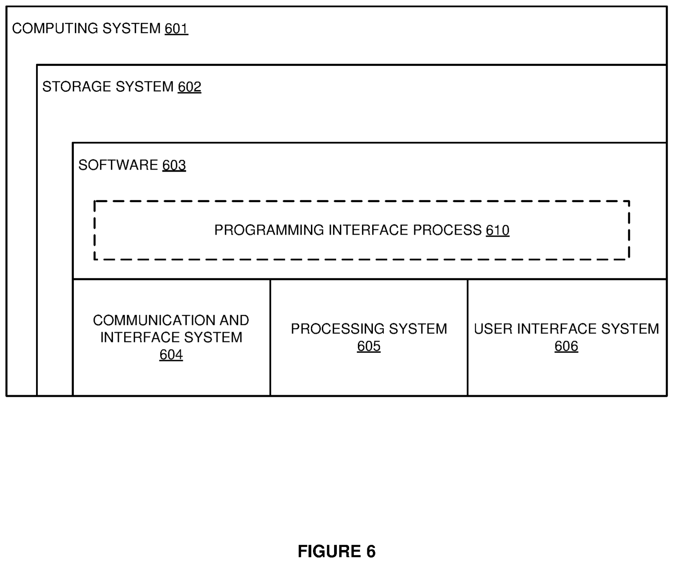

Figure 6 illustrates computing system 601 according to an implementation of the present technology. Computing system 601 is representative of any system or collection of systems with which the various operational architectures, processes, scenarios, and sequences disclosed herein for implementing programming interfaces into automation code. For example, computing system 601 may be representative of processing circuitry 111, PLC 120, industrial device 131, upstream processes 132, downstream processes 133, server 311, PLC 360, actuators 371-373, conveyor 374, OEM devices 375, and/or any other computing device contemplated herein. Computing system 601 may be implemented as a single apparatus, system, or device or may be implemented in a distributed manner as multiple apparatuses, systems, or devices. Computing system 601 includes, but is not limited to, storage system 602, software 603, communication interface system 604, processing system 605, and user interface system 606. Processing system 605 is operatively coupled with storage system 602, communication interface system 604, and user interface system 606.

Processing system 605 loads and executes software 603 from storage system 602. Software 603 includes and implements programming interface process 610, which is representative of any of the IDE processes to integrate programming interfaces into automation code discussed with respect to the preceding Figures, including but not limited to the control program generation, programming interface creation, and user interface operations described with respect to the preceding Figures. For example, programming interface process 610 may be representative of process 200 illustrated in Figure 2. When executed by processing system 605 to integrate programming interfaces into automation code, software 603 directs processing system 605 to operate as described herein for at least the various processes, operational scenarios, and sequences discussed in the foregoing implementations. Computing system 601 may optionally include additional devices, features, or functionality not discussed for purposes of brevity.

Processing system 605 may comprise a micro-processor and other circuitry that retrieves and executes software 603 from storage system 602. Processing system 605 may be implemented within a single processing device but may also be distributed across multiple processing devices or sub-systems that cooperate in executing program instructions. Examples of processing system 605 include general purpose CPUs, GPUs, DSPs, ASICs, FPGAs, and logic devices, as well as any other type of processing device, combinations, or variations thereof.

Storage system 602 may comprise any computer readable storage media readable by processing system 605 and capable of storing software 603. Storage system 602 may include volatile, nonvolatile, removable, and/or non-removable media implemented in any method or technology for storage of information, such as computer readable instructions, data structures, program modules, or other data. Examples of storage media include RAM, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 602 may also include computer readable communication media over which at least some of software 603 may be communicated internally or externally. Storage system 602 may be implemented as a single storage device but may also be implemented across multiple storage devices or sub-systems co-located or distributed relative to each other. Storage system 602 may comprise additional elements, such as a controller, capable of communicating with processing system 605 or possibly other systems.

Software 603 (including programming interface process 610) may be implemented in program instructions and among other functions may, when executed by processing system 605, direct processing system 605 to operate as described with respect to the various operational scenarios, sequences, and processes illustrated herein. For example, software 603 may include program instructions for generating a programming interface that describes the functionality of industrial device code and adding the programming interface to the code as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 603 may include additional processes, programs, or components, such as operating system software, virtualization software, or other application software. Software 603 may also comprise firmware or some other form of machine-readable processing instructions executable by processing system 605.

In general, software 603 may, when loaded into processing system 605 and executed, transform a suitable apparatus, system, or device (of which computing system 601 is representative) overall from a general-purpose computing system into a special-purpose computing system customized to generate programming interfaces that define automation code functionality and integrate the programming interface into the automation code as described herein. Indeed, encoding software 603 on storage system 602 may transform the physical structure of storage system 602. The specific transformation of the physical structure may depend on various factors in different implementations of this description. Examples of such factors may include, but are not limited to, the technology used to implement the storage media of storage system 602 and whether the computer-storage media are characterized as primary or secondary storage, as well as other factors.

For example, if the computer readable storage media are implemented as semiconductor-based memory, software 603 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 604 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and an extended discussion of them is omitted for the sake of brevity.

While some examples provided herein are described in the context of computing devices for integrating programming interfaces into automation code, it should be understood that the condition systems and methods described herein are not limited to such embodiments and may apply to a variety of other industrial automation environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

## Claims

1. A method comprising:
generating, by an Integrated Design Environment (IDE) of an industrial automation environment, a control program executable by a Programmable Logic Controller (PLC) for an industrial device, wherein the control program comprises code to implement functionality of the industrial device;
generating, by the IDE, a programming interface that defines the functionality of the industrial device;
adding, by the IDE, the programming interface to the code; and
providing, by the IDE, the control program to the PLC for execution by the PLC.

2. The method of claim 1 wherein the industrial automation environment comprises another industrial device that comprises a same device type as the industrial device; and further comprising:
modifying, by the IDE, the control program to include other code to implement other functionality of the other industrial device, wherein the other code is the same as the code for the industrial device and the other functionality is the same as the functionality of the industrial device; and
adding, by the IDE, the programming interface for the code to the other code based on the same device type.

3. The method of claim 1 or 2 wherein the industrial automation environment comprises another industrial device that comprises a same device type as the industrial device; and further comprising:
modifying, by the IDE, the control program to include other code to implement other functionality of the other industrial device, wherein the other code is different than the code for the industrial device and the other functionality is the same as the functionality of the industrial device; and
adding, by the IDE, the programming interface for the code to the other code based on the same device type.

4. The method of one of claims 1 to 3 wherein the industrial automation environment comprises another industrial device that comprises a different device type as the industrial device; and further comprising:
modifying, by the IDE, the control program to include other code to implement other functionality of the other industrial device, wherein the other code is different than the code for the industrial device and the other functionality is different than the functionality of the industrial device;
generating, by the IDE, another programming interface that defines the other functionality of the other industrial device; and
adding, by the IDE, the other programming interface to the other code based on the different device type.

5. The method of one of claims 1 to 4, at least one of:
wherein the control program comprises ladder logic;
wherein the control program comprises a functional block; and
wherein the control program comprises a smart object.

6. A method comprising:
providing, via an Integrated Design Environment (IDE) a graphical user interface that comprises functionality for designing a control program executable by a Programable Logic Controller (PLC) wherein the control program implements a capability of an industrial device when executed by the PLC; and
the functionality comprises:
defining a programming interface that describes the capability of the industrial device;
incorporating the programming interface into the control program; and
leveraging the programming interface in the control program to isolate a first portion of the control program that implements the capability of the industrial device from a second portion of the control program that requests the capability of the industrial device via the programming interface.

7. The method of claim 6 wherein:
the control program implements another capability of another industrial device when executed by the PLC;
the other industrial device comprises a same device type as the industrial device;
the other capability is the same as the capability of the industrial device; and
the functionality comprises:
leveraging the programming interface in the control program to isolate a third portion of the control program that implements the other capability of the other industrial device from a fourth portion of the control program that requests the other capability of the other industrial device via the programming interface based on the other capability of the other industrial device being the same as the capability of the industrial device.

8. The method of claim 6 or 7 wherein:
the control program implements another capability of another industrial device when executed by the PLC;
the other industrial device comprises a different device type as the industrial device;
the other capability is the same as the capability of the industrial device; and
the functionality comprises:
leveraging the programming interface in the control program to isolate a third portion of the control program that implements the other capability of the other industrial device from a fourth portion of the control program that requests the other capability of the other industrial device via the programming interface based on the other capability of the other industrial device being the same as the capability of the industrial device.

9. The method of one of claims 6 to 8 wherein:
the control program implements another capability of another industrial device when executed by the PLC;
the other industrial device comprises a different device type as the industrial device;
the other capability is different than the capability of the industrial device; and
the functionality comprises:
defining another programming interface that describes the other capability of the industrial device;
incorporating the other programming interface into the control program;
leveraging the other programming interface in the control program to isolate a third portion of the control program that implements the other capability of the other industrial device from a fourth portion of the control program that requests the other capability of the other industrial device via the other programming interface based on the other capability of the other industrial device being different than the capability of the industrial device.

10. The method of one of claims 6 to 9, at least one of:
wherein the control program comprises ladder logic;
wherein the control program comprises a functional block; and
wherein the control program comprises a smart object.

11. A system comprising:
processing circuitry of an Integrated Design Environment (IDE) of an industrial automation environment configured to:
generate a control program executable by a Programmable Logic Controller (PLC) for an industrial device, wherein the control program comprises code to implement functionality of the industrial device;
generate a programming interface that defines the functionality of the industrial device;
add the programming interface to the code; and
provide the control program to the PLC for execution by the PLC.

12. The system of claim 11 wherein the industrial automation environment comprises another industrial device that comprises a same device type as the industrial device; and wherein the processing circuitry is further configured to:
modify the control program to include other code to implement other functionality of the other industrial device, wherein the other code is the same as the code for the industrial device and the other functionality is the same as the functionality of the industrial device;
add the programming interface for the code to the other code based on the same device type.

13. The system of claim 11 or 12 wherein the industrial automation environment comprises another industrial device that comprises a same device type as the industrial device; and wherein the processing circuitry is further configured to:
modify the control program to include other code to implement other functionality of the other industrial device, wherein the other code is different than the code for the industrial device and the other functionality is the same as the functionality of the industrial device; and
add the programming interface for the code to the other code based on the same device type.

14. The system of one of claims 11 to 13 wherein the industrial automation environment comprises another industrial device that comprises a different device type as the industrial device; and wherein the processing circuitry is further configured to:
modify the control program to include other code to implement other functionality of the other industrial device, wherein the other code is different than the code for the industrial device and the other functionality is different that the functionality of the industrial device;
generate another programming interface that defines the other functionality of the other industrial device; and
add the other programming interface to the other code based on the different device type.

15. The system of one of claims 11 to 14, at least one of:
wherein the processing circuitry is further configured to:
provide a graphical user interface that comprises capabilities for designing the control program executable by the PLC; and
the capabilities comprise:
defining the programming interface that describes the functionality of the industrial device;
incorporating the programming interface into the control program; and
leveraging the programming interface in the control program to isolate a first portion of the control program that implements the functionality of the industrial device from a second portion of the control program that requests the functionality of the industrial device via the programming interface; and
wherein the control program comprises one or more of ladder logic, a functional block, or a smart object.
